(19) Europäisches Patentamt
European Patent Office
Office européen des brevets

(11) EP 0 599 182 B1

(12) EUROPÄISCHE PATENTSCHRIFT

(45) Veröffentlichungstag und Bekanntmachung des Hinweises auf die Patenterteilung:
03.09.1997 Patentblatt 1997/36

(51) Int. Cl.$^6$: C02F 11/08

(21) Anmeldenummer: 93118478.2

(22) Anmeldetag: 16.11.1993

(54) **Verfahren zur Oxidation von Ammoniumionen und organischem Kohlenstoff in Abwässern**

Process for oxidation of ammonium ions and organic carbon in waste water

Procédé pour oxyder des ions ammonium et du carbone organique dans les eaux usées

(84) Benannte Vertragsstaaten:
AT BE DE ES FR GB IT NL SE

(30) Priorität: 25.11.1992 DE 4239487

(43) Veröffentlichungstag der Anmeldung:
01.06.1994 Patentblatt 1994/22

(73) Patentinhaber: BASF Aktiengesellschaft
67063 Ludwigshafen (DE)

(72) Erfinder:
• Baur, Karl Gerhard, Dr.
D-67063 Ludwigshafen (DE)
• Papkalla, Thomas, Dr.
D-68159 Mannheim (DE)
• Kanne, Ulrich, Dr.
D-67227 Frankenthal (DE)
• Stops, Peter
D-67122 Altrip (DE)

(56) Entgegenhaltungen:
DE-A- 2 220 385        FR-A- 2 164 894

• DIN-Norm 38406, Teil 23
• DIN-Norm 38409, Teil 3

# EP 0 599 182 B1

**Beschreibung**

Die vorliegende Erfindung betrifft ein Verfahren zur Oxidation von Ammoniumionen und organischem Kohlenstoff in Ammoniumionen und organischen Kohlenstoff enthaltenden Abwässern mit Salpetersäure bei 100 bis 350°C.

Die Aufbereitung von Abwässern aus chemischen Produktionen vor Einleitung in eine Kläranlage gewinnt zunehmend an Bedeutung. Inhaltsstoffe, welche eine Kläranlage unverändert passieren, müssen dem jeweiligen Stand der Technik entsprechend eliminiert oder zumindest in ihrer Konzentration vermindert werden. Darüber hinaus kann es vorteilhaft sein, auch organische Inhaltsstoffe, welche biologisch gut abbaubar sind, aus Abwässern vor Abgabe in eine Kläranlage ganz oder teilweise zu entfernen, um die Behandlungskosten dieser Abwässer zu vermindern.

Ein optimales Behandlungsverfahren von Abwässern soll es ermöglichen, schwer oder nicht abbaubare Verbindungen aus dem Abwasser zu eliminieren und leicht abbaubare Komponenten im Abwasser soweit zu verringern, daß die Kosten für diese Maßnahme geringer sind, als die Kosten für den biologischen Abbau in einer Kläranlage.

Besonders problematisch in Abwässern sind Ammoniumionen, da diese eine biologische Kläranlage weitgehend unverändert passieren.

Entsprechend der Bedeutung des Problems, Ammonium aus Abwässern zu entfernen, sind zahlreiche Verfahren beschrieben.

Die DE-A 29 38 654 beispielsweise beschreibt die Reaktion zwischen Ammonium und Stickoxiden. Der hierbei erforderliche Einsatz von gasförmigem $NO_x$ ist verfahrenstechnisch auch wegen der Zweiphasigkeit der Reaktionen problematisch.

Aus der DE-A 27 40 536 ist bekannt, Ammonium in Abwässern durch Reaktion mit Nitrit zu beseitigen. Mit diesem Verfahren können biologisch schwer abbaubare Verbindungen nicht entfernt werden; außerdem müssen dem Abwasser zwangsweise Salze zugefügt werden.

Aus der DE-A 22 62 754 ist ein Verfahren zum Behandeln von Abwasser bekannt, bei dem kohlenstoffhaltige Verunreinigungen bei erhöhten Temperaturen in der Wasserphase durch Salpetersäure zu gasförmigen Reaktionsprodukten oxidiert werden. Dabei werden auch Ammoniumionen abgebaut, jedoch nicht in einem ausreichenden Maß, wie aus den Beispielen ersichtlich ist.

Die WO 92/18 426 lehrt ein Verfahren zum Abbau von Stickstoffverbindungen in Abwässern, bei dem man die Anteile an Verbindungen, die Stickstoff in unterschiedlichen Oxidationsstufen enthalten, so einstellt, daß beim Erhitzen des Abwassers auf 300 bis 600°C ein stickoxidfreies Abgas anfällt. Anwesender organischer Kohlenstoff stört bei diesem Verfahren.

Der Erfindung lag nun die Aufgabe zugrunde, ein Verfahren zur Verfügung zu stellen, mit dem Ammoniumionen in Abwässern nahezu quantitativ abgebaut werden können und das sich verfahrenstechnisch möglichst einfach durchführen läßt, wobei auch der Gehalt an organischen Verbindungen im Abwasser deutlich vermindert werden kann. Weiterhin soll das Abwasser nicht durch Zugabe größerer Mengen anderer Stoffe, wie Nitrite oder Nitrate, belastet werden.

Die Aufgabe wurde gelöst mit einem Verfahren zur Oxidation von Ammoniumionen und organischem Kohlenstoff in Ammoniumionen und organischen Kohlenstoff enthaltenden Abwässern mit Salpetersäure bei 100 bis 350°C, das dadurch gekennzeichnet ist, daß man das Molverhältnis von organischem Kohlenstoff zu Ammoniumstickstoff durch Zugabe von organischem Kohlenstoff bzw. Ammoniumstickstoff auf einen Bereich von O,3 : 1 bis 4 : 1 stellt und die Menge der freien Salpetersäure im Abwasser 1 bis 10 Gew.-% beträgt.

Als besonders vorteilhaft hat sich eine Arbeitsweise des erfindungsgemäßen Verfahrens erwiesen, bei der das Molverhältnis von organischem Kohlenstoff zu Ammoniumstickstoff auf einen Bereich von 0,7 : 1 bis 2 : 1 gestellt wird.

Zur Eliminierung von Ammoniumionen aus Abwässern nach dem erfindungsgemäßen Verfahren müssen die Abwässer eine hinreichende Menge an organischem Kohlenstoff enthalten. Dieser reduziert die Salpetersäure vermutlich intermediär zur salpetrigen Säure, welche dann mit Ammoniumionen zu Stickstoff synproportionieren kann.

Analytisch wird der organische Kohlenstoff meist als TOC (total organic carbon) erfaßt, woraus sich n, die Molzahl des organischen Kohlenstoffs pro Liter Abwasser, nach der Beziehung

$$n = \frac{TOC}{12}$$

ergibt.

Abwässer, die, weil sie zu wenig organischen Kohlenstoff enthalten, ein Molverhältnis von organischem Kohlenstoff zu Ammoniumstickstoff aufweisen, das nicht im erfindungsgemäßen Bereich liegt, wird organischer Kohlenstoff zugegeben.

Dies kann z.B. durch Vermischen mit anderen, mehr organischen Kohlenstoff enthaltenden Abwässern oder auch durch Zugabe anderer oxidierbarer organischer Abfallstoffe erreicht werden.

Ammoniumhaltige Abwässer enthalten sehr haufig auch primäre, sekundäre oder tertiäre Amine, welche den notwendigen Kohlenstoff liefern, wobei die Konzentration der eine selbst nennenswert vermindert wird. Das erfindungsgemäße Verfahren ist daher zur Behandlung von Abwässern aus der Aminproduktion besonders geeignet.

Abwässer, die, weil sie zu wenig Ammoniumstickstoff enthalten, ein Molverhältnis von organischem Kohlenstoff zu

2

Ammoniumstickstoff aufweisen, das nicht im erfindungsgemäßen Bereich liegt, wird die erforderliche Menge an Ammoniumstickstoff zugegeben.

Dies kann z.B. durch Vermischen mit anderen, mehr Ammoniumstickstoff enthaltenden Abwässern oder auch durch Versetzen mit Ammoniumstickstoff enthaltenden Verbindungen erfolgen, die bei der chemischen Produktion als Abfallstoffe auftreten, etwa Ammoniumsulfat aus der Caprolactam-Produktion.

Werden Abwässer, die organischen Kohlenstoff, aber keine Ammoniumionen enthalten, mit Salpetersäure behandelt, so findet eine weitgehende Oxidation der organischen Inhaltsstoffe statt. Die eingesetzte Salpetersäure wird hierbei überwiegend zu Stickstoffmonoxid, aber auch zu Stickstoffdioxid und in untergeordnetem Maße auch zu Stickstoff und Distickstoffmonoxid reduziert. Dies weist auf eine wenig übersichtlich verlaufende Oxidationsreaktion der organischen Inhaltsstoffe mit der Salpetersäure hin.

Es ist in hohem Maße überraschend, daß bei Gegenwart von Ammoniumionen diese in den Oxidations-Reduktionsmechanismus derart eingreifen, daß unabhängig von der Art der organischen Verbindungen Ammoniumionen praktisch quantitativ zu Stickstoff umgewandelt werden.

Die Zugabe von Salpetersäure zum Abwasser beim erfindungsgemäßen Verfahren wird in üblicher Weise vorgenommen und kann flexibel an das vorliegende Abwasser bzw. an den gewünschten Abbau von Ammoniumionen und organischem Kohlenstoff angepaßt werden. Dies verschafft dem erfindungsgemäßen Verfahren besondere Anpassungsfähigkeit und Wirtschaftlichkeit verglichen mit der Naßoxidation oder anderen bisher bekannten Verfahren. Die insgesamt benötigte Menge an Salpetersäure liegt bei üblichen Abwässern zweckmäßigerweise zwischen 1 und 10 Gew.-%, bezogen auf das Abwasser.

Als Salpetersäure kann jede technisch gebräuchliche, auch verunreinigte Salpetersäure, eingesetzt werden. Als Druckbehälter eignen sich bevorzugt Rohrreaktoren oder in Kaskade geschaltete Autoklaven. Da die Reaktionsenthalpie bei geringen Mengen an Inhaltsstoffen bezogen auf Wasser vernachlässigt werden kann, kann die Reaktion in diesem Fall adiabatisch durchgeführt werden, so daß einfachste Reaktoren angewendet werden können. Diese Reaktoren müssen lediglich eine mindest notwendige Verweilzeit unter Vermeidung von Rückvermischung garantieren. Hierdurch ist das Verfahren, insbesondere verglichen mit der weitverbreiteten Naßoxidation, technisch äußerst einfach durchzuführen und günstig in den Investitionskosten. Die einzuhaltende Verweilzeit liegt bei hinreichend hoher Temperatur im Bereich von wenigen Minuten, was zu kleinen Reaktoren führt.

Die angewandten Drücke liegen bevorzugt im Bereich von 20 bis 190 bar, insbesondere 40 bis 120 bar, die Temperaturen, bei denen das Verfahren durchgeführt wird, insbesondere bei 240 bis 300°C.

Bei verdünnten Abwässern muß das Abwasser durch direkte oder indirekte Beheizung erhitzt werden. Bei konzentrierten Abwässern läuft der Prozeß autotherm (analog der Naßoxidation).

Besonders bevorzugt ist es, das erfindungsgemäße Verfahren kontinuierlich durchzuführen.

Es hat sich herausgestellt, daß als Verweilzeit der Abwässer im Reaktor beim erfindungsgemäßen Verfahren wenige Minuten ausreichend sind, um die Ammoniumionen abzubauen, insbesondere wenn das Verfahren kontinuierlich geführt wird.

Es wurde ferner gefunden, daß sich das Verfahren besonders vorteilhaft bei einem pH-Wert ≤ 6 durchführen läßt.

Es ist möglich, sowohl biologisch leicht, als auch schwer abbaubare Verbindungen aus den Abwässern zu entfernen. Das erfindungsgemäße Verfahren zeichnet sich daher durch geringen verfahrenstechnischen Aufwand, hohe Wirksamkeit und besondere Flexibilität aus.

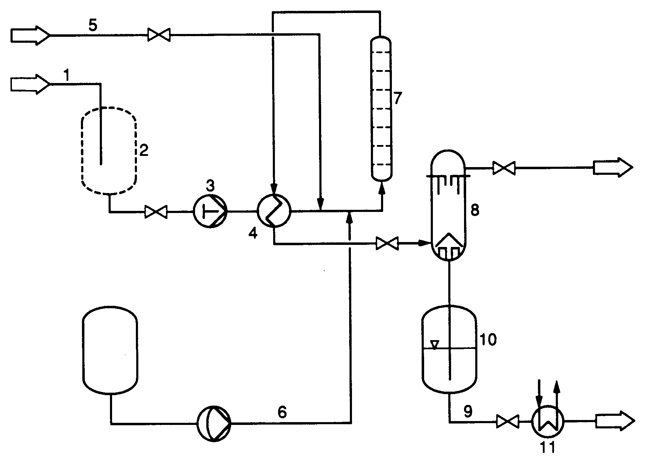

In einer bevorzugten Ausgestaltung, die beispielhaft in der Figur wiedergegeben ist, wird das Abwasser, welches je nach dem TOC-Gehalt mit organisch C angereichert werden kann, über die Zuleitung (1), ggf. aus einem Zwischentank (2), mit einer Pumpe (3) durch einen Wärmetauscher (4) gefördert, in dem es auf beispielsweise 270°C vorgewärmt wird. Anschließend wird das vorgewärmte Abwasser durch Direkteinspeisung von 100 bar HD-Dampf über Leitung (5) oder durch eine indirekte Beheizung auf 290°C erhitzt. Nach Einstellung der für den Ammoniumabbau notwendigen Salpetersäurekonzentration, z.B. über eine Zuleitung (6), in dem 290°C heißen Abwasser wird dieses durch einen Reaktor (7) ohne Rückvermischung (z.B. Rohrreaktor mit Einbauten, der mit Titan ausgekleidet ist) gefördert. Nach einer Verweilzeit von beispielsweise 5 bis 10 min wird die Reaktionslösung im Gegenstrom mit dem Feed abgekühlt und in einem Abscheider (8) entspannt. Über eine Leitung (9) wird das Abwasser, über einen Zwischentank (10) und einen Wärmetauscher (11) abgeführt.

Zur kontinuierlichen Ausgestaltung des Verfahrens benutzt man vorzugsweise einen Rohrreaktor, in welchem die Strömung der Flüssigkeit so eingestellt ist, daß Rückvermischung unterbleibt.

Beispiele

Beispiel 1

Abbau von Ammonium mit Salpetersäure in Anwesenheit von org. C

In einem Autoklaven wurde eine Lösung von 1 % Ammoniumsulfat, 5 % Salpetersäure und 3 % Formaldehyd (gerechnet 100 %) für 8 h bei 250°C (50 bar) gehalten und anschließend abgekühlt, entspannt und der Gehalt an Ammonium bestimmt. Die Analyse zeigt einen Ammoniumabbau von > 97 %.

Beispiel 2 (Vergleichsbeispiel)

Abbau von Ammonium mit Salpetersäure in Abwesenheit von org. C

In einem Autoklaven wurde eine Lösung von 1 % Ammoniumsulfat und 5 % Salpetersäure für 8 h bei 250°C (50 bar) gehalten und anschließend abgekühlt, entspannt und der Gehalt an Ammonium bestimmt. Die Analyse zeigt einen Ammoniumabbau von 35 %.

Beispiel 3

Ein Betriebsabwasser mit der angegebenen Zusammensetzung wurde bei den unter A) und B) angegebenen Reaktionsbedingungen in einem Rohrreaktor behandelt:

| Zusammensetzung des Abwasser: | TOC: | 1,4 % |
|---|---|---|
| | Gesamt-N: | 1,1 % |
| | $NH_4^+$: | 1,1 % |

Zusammensetzung des Abwassers nach der Behandlung bei verschiedenen Bedingungen:

A) Reaktortemperatur = 280°C, Druck = 90 bar, $HNO_3$ = 5 Gew.-%

| VWZ [min] | TOC [%] | Gesamt-N [%] | $NH_4^+$ [%] | $NO_3^-$ [%] | $NO_2^-$ [%] |
|---|---|---|---|---|---|
| 10 | 0,71 | 0,15 | 0,025 | < 0,005 | < 0,005 |
| 5 | 0,74 | 0,15 | 0,024 | < 0,005 | < 0,005 |

B) Reaktortemperatur = 260°C, Druck 90 bar, $HNO_3$ = 5 Gew.-%

| VWZ [min] | TOC [%] | Gesamt-N [%] | $NH_4^+$ [%] | $NO_3^-$ [%] | $NO_2^-$ [%] |
|---|---|---|---|---|---|
| 10 | 0,75 | 0,15 | 0,023 | < 0,005 | < 0,005 |
| 5 | 0,75 | 0,15 | 0,020 | < 0,005 | < 0,005 |

Der Abbau von Ammonium betrug unter allen Reaktionsbedingungen > 97,5 %, bei einer Verminderung des TOC von ca. 50 %.

Beispiel 4

Analog zu Beispiel 3 wurde folgendes Abwasser behandelt:

| Zusammensetzung des Abwasser: | TOC: | 0,37 % |
|---|---|---|
| | Gesamt-N: | 0,23 % |
| | $NH_4^+$: | 0,30 % |

Nach der Behandlung mit 2 Gew.-% $HNO_3$ bei 280°C, 80 bar und 10 min Verweilzeit hatte das Abwasser folgende Zusammensetzung:
TOC = 0,16 %; $NH_4^+$ = 0,005 %; $NO_2^-$ = < 0,005 %; $NO_3^-$ = 0,005 %; Gesamt-N = 0,03 %

Beispiel 5

Analog zu Beispiel 3 wurde folgendes Abwasser behandelt:

| Zusammensetzung des Abwasser: | TOC: | 0,33 % |
|---|---|---|
| | Gesamt-N: | 0,54 % |
| | $NH_4^+$: | 0,60 % |

Nach der Behandlung mit 3 Gew.-% $NHO_3$ bei 270°C, 80 bar und 10 min Verweilzeit hatte das Abwasser folgende Zusammensetzung:
TOC = 0,06 %; $NH_4^+$ = < 0,002 %; Gesamt-N = 0,05 %
Die Analyse des entstandenen Abgases ergab folgende Zusammensetzung:
$N_2$ = 67,5 Vol.-%; NO = 1,09 Vol.-%; $NO_2$ = 0,11 Vol.-%;
$N_2O$ = 1,32 Vol.-%; CO = 16,5 Vol.-%; $CO_2$ = 12,9 Vol.-%

**Patentansprüche**

1. Verfahren zur Oxidation von Ammoniumionen und organischem Kohlenstoff in Ammoniumionen und organischen Kohlenstoff enthaltenden Abwässern mit Salpetersäure bei 100 bis 350°C, dadurch gekennzeichnet, daß man das Molverhältnis von organischem Kohlenstoff zu Ammoniumstickstoff durch Zugabe von organischem Kohlenstoff bzw. Ammoniumstickstoff auf einen Bereich von 0,3 : 1 bis 4 : 1 stellt und die Menge der freien Salpetersäure im Abwasser 1 - 10 Gew.-% beträgt.

2. Verfahren nach Anspruch 1, dadurch gekennzeichnet, daß man das Molverhältnis von organischem Kohlenstoff zu Ammoniumstickstoff auf einen Bereich von 0,7 : 1 bis 2 : 1 stellt.

3. Verfahren nach Anspruch 1 oder 2, dadurch gekennzeichnet, daß die Abwässer auf eine Temperatur von 240 - 300°C erwärmt werden.

4. Verfahren nach den Ansprüchen 1 bis 4, dadurch gekennzeichnet, daß man die Oxidation bei einem pH-Wert ≤ 6 durchführt.

5. Verfahren nach den Ansprüchen 1 bis 5, dadurch gekennzeichnet, daß es kontinuierlich durchgeführt wird.

6. Verfahren nach Anspruch 6, dadurch gekennzeichnet, daß es in einem Rohrreaktor durchgeführt wird.

**Claims**

1. A process for the oxidation of ammonium ions and organic carbon in wastewaters containing ammonium ions and organic carbon by means of nitric acid at from 100 to 350°C, wherein the molar ratio between organic carbon and ammonium nitrogen is adjusted to a value in the range from 0.3:1 to 4:1 by addition of organic carbon or ammonium nitrogen and the amount of free nitric acid in the wastewater is 1-10% by weight.

2. A process as claimed in claim 1, wherein the molar ratio between organic carbon and ammonium nitrogen is adjusted to a value in the range from 0.7:1 to 2:1.

3. A process as claimed in claim 1 or 2, wherein the wastewaters are heated to 240-300°C.

4. A process as claimed in any of claims 1 to 3, wherein the oxidation is carried out at a pH of ≤ 6.

5. A process as claimed in any of claims 1 to 4, which is carried out continuously.

6. A process as claimed in claim 5, which is carried out in a tube reactor.

**Revendications**

1. Procédé d'oxydation d'ions ammonium et de carbone organique dans des eaux usées contenant des ions ammonium et du carbone organique, avec de l'acide nitrique à 100-350°C, caractérisé en ce qu'on établit le rapport en moles du carbone organique à l'azote des ammoniums dans un domaine de 0,3 : 1 à 4 : 1 par addition de carbone organique, respectivement d'azote sous forme d'ammonium et la quantité d'acide nitrique libre dans l'eau usée s'élève à 1-10 % en poids.

2. Procédé selon la revendication 1, caractérisé en ce qu'on établit le rapport en moles du carbone organique à l'azote sous forme d'ammonium dans un domaine de 0,7 : 1 à 2 : 1.

3. Procédé selon l'une des revendications 1 et 2, caractérisé en ce que les eaux usées sont chauffées jusqu'à une température de 240-300°C.

4. Procédé selon l'une des revendications 1 à 3, caractérisé en ce que l'oxydation est menée à un pH ≤ 6.

5. Procédé selon l'une des revendications 1 à 4, caractérisé en ce qu'il est mené de façon continue.

6. Procédé selon la revendication 5, caractérisé en ce qu'il est mené dans un réacteur tubulaire.